# EUROPÄISCHE PATENTSCHRIFT

(11) **EP 0 769 595 B1**
(45) Veröffentlichungstag und Bekanntmachung des Hinweises auf die Patenterteilung: **13.02.2002**
(21) Anmeldenummer: 96116236.9
(22) Anmeldetag: 10.10.1996
(51) Int. Cl.: E04C 2/54

(54) **Brandsicheres, transparentes Scheibenelement und dessen Verwendung**
Fire proof transparent panel and its application
Panneau transparent anti-feu et procédé d'utilisation

(30) Priorität: 21.10.1995 DE 19539214
(43) Veröffentlichungstag der Anmeldung: 23.04.1997
(73) Patentinhaber: Röhm GmbH & Co. KG, 64293 Darmstadt (DE)
(72) Erfinder: Oberländer, Klaus, 63457 Hanau (DE); Brand, Norbert, Dr., 64291 Darmstadt (DE); Belzner, Winfried, 63584 Gründau (DE)

(56) Entgegenhaltungen:
- EP-A- 0 407 852
- DE-A- 4 326 232
- US-A- 3 666 614

## Beschreibung

Die Erfindung befaßt sich mit transparenten auf Kunststoffscheiben beruhenden Scheibenelementen, die als Lärmschutzelemente Anwendung finden können. Insbesondere bezieht sich die Erfindung auf die Verbesserung der Brandeigenschaften von transparenten Scheibenelementen mit einer transparenten Kunststoffscheibe mit eingebetteten monofilen Kunststoffäden, die geeignet sind, im Falle eines Bruches der Kunststoffscheibe das Entstehen und Herabfallen von losen Bruchstücken zu verhindern oder verringern.

Lärmschutzwände aus Kunststoff sind z. B. aus der EP 0 407 852 A2 (≅ US-A 5,040,352) bekannt. Die Kunststoffscheiben dieser bekannten Art erfüllen ihre Aufgabe, das Entstehen und Herabfallen von losen Bruchstücken zu verhindern, in ausgezeichneter Weise. In den beschriebenen Kunststoffscheiben können auch zusätzlich Streifen, Ornamente oder Figuren eingebettet werden, die dem Schutz von Vögeln dienen.

Aus der österreichischen Patentschrift 263 298 ist eine transluzente Bauplatte bekannt, die ein teilweise metallisiertes Gewebe eingegossen enthält. Das Gewebe ist eine Armierung der Bauplatte, kann jedoch im Falle eines Bruches die Entstehung von einzelnen Bruchstücken nicht verhindern, da ein Gewebe im Falle eines Bruches wegen der hohen Festigkeit des Kunststoffmaterials der Bauplatte zusammen mit dieser bricht. Außerdem verhindern die feinen Lichtöffnungen in dem Gewebe eine Transparenz der Bauplatte, so daß diese nur als Lichtelemente, nicht jedoch als Scheiben einsetzbar sind. Hinzu kommt, daß eine Metallisierung des Gewebes Reflexe oder Reflexionen bewirken kann, die zum einen störend sind und zum anderen an einer Seite eine nicht gegebene Transparenz vortäuschen können.

Aus der DE-U-84 35 283 sind transparente Bauplatten bekannt, bei denen einzelne Teile, die im Falle eines Bruches entstehen können, durch außenliegende Fangseile gesichert sind. Die vorgesehenen Bruchteile sind verhältnismäßig groß und können in weitere, immer noch verhältnismäßig große freie Bruchstücke zerbrechen. Diesen bekannten Platten können z. B. zum Zwecke des Vogelschutzes übliche Streifen (o. ä.) hinzugefügt werden.

Aus "Schweizer Ingenieur und Architekt", Nr. 13, 1988, Seiten 379 und 380 sind Schallschutzscheiben bekannt, die im Falle eines Bruches in lose Bruchstücke zerfallen. Zum Zwecke des Vogelschutzes können auf diese Scheiben z. B. 5 mm breite Vertikal-Streifen aufgeätzt werden. Dieser zusätzliche Aufwand ist teuer, erhöht die Gefahr der Verschmutzung der Scheibe und ist ästhetisch wenig ansprechend.

Aus der DE 43 26 232 A1 kennt man Kunststoff-Verbunde aus unverträglichen Kunststoffen, wobei mindestens zwei miteinander unverträgliche Kunststoffe mit guter Haftung zwischen den Schichten des mehrschichtigen Kunststoffverbundes coextrudiert werden. Außer der kontinuierlichen Herstellung unterscheidet sich der vorgestellte Verbundkörper in nichts von den z. B. aus der EP-PS 0 407 852 bekannten Elementen. Es wird jeweils ohne zusätzlichen Haftvermittler zwischen den beiden Kunststoffen entweder diskontinuierlich im Gießverfahren oder kontinuierlich durch Coextrusion ein verstärktes Kunststoffelement erhalten, das beim eventuellen Bruch der Matrix (bevorzugt Acrylglas) sich durch die Eigenschaft des zweiten Kunststoffmaterials auszeichnet, die entstehenden Bruchstücke zusammenzuhalten. Diese Splitterbindung beruht auf der Fähigkeit der eingebetteten Kunststoffäden sich zu dehnen ohne zu zerreißen. Dabei werden Bruchstücke der Matrix zusammengehalten.

Aufgrund der vorerwähnten Eigenschaften wird beim Bau von Lärmschutzwänden an öffentlichen Verkehrsflächen in vielen Fällen der Verwendung von durchsichtigen Lärmschutzelementen aus Acrylglas gegenüber anderen Materialien der Vorzug gegeben.

Obwohl beim Aufprall eines Fahrzeugs auf ein solches Lärmschutzelement die Gefahr, daß es zerbricht und daß Bruchstücke auf die Fahrbahn herabfallen, deutlich verringert ist, weisen alle bislang bekanntgewordenen und hierin genannten Kunststoffelemente noch verschiedene z. T. auch gravierende Nachteile auf.

So besteht gerade beim Aufprall eines Fahrzeugs die ernstliche Gefahr, daß sich die Kunststoffelemente, deren Matrix aus leicht brennbaren Kunststoffen besteht, entzünden. Dabei ist die Gefährdung, die von brennenden Lärmschutzelementen ausgeht, fast noch schwerwiegender als etwa umherfliegende Splitter. Andererseits ist eine Flammfest-Ausrüstung der Kunststoffmatrix entweder relativ teuer oder geht zu Lasten anderer Eigenschaften, wie etwa der Transparenz. Es besteht mithin ein dringender Bedarf nach Lärmschutzplatten mit erhöhter Brandsicherheit.

Darüber hinaus ist bei bekannten Lärmschutzelementen aus Acrylglas beim Reinigen der relativ leicht verschmutzenden Oberflächen häufig ein Zerkratzen festzustellen, was wiederum die Haltbarkeit der Platten negativ beeinflußt. Werden die Lärmschutzelemente nicht gereinigt, ist aber auf längere Sicht deren Tauglichkeit als transparente Elemente in Frage gestellt. Werden die Platten kratzfest beschichtet, so kann man sie zwar mit Bürsten usw. reinigen, die Kratzfestbeschichtung ist aber verhältnismäßig teuer. Ein leicht zu reinigendes billiges Lärmschutzelement ist daher sehr wünschenswert.

Schließlich leiden die bekannten Lärmschutzelemente auch noch an einer häufig relativ geringen Biegesteifigkeit. Dies führt entweder dazu, daß bei bekannten Elementen relativ geringe Abstände von Befestigungspfosten einzuhalten sind oder, daß sich bei sogenannten noch oben freistehenden Systemen der obere Plattenrand gefährlich weit durchbiegt. Dies kann ggf. zu einem Bruch des ganzen Elements führen. Andernfalls wird die Dimensionierung der Elemente unnötig beschränkt.

Verbundscheiben, bei denen zwischen Scheiben aus anorganischem Glas eine Kunststoffscheibe in Form einer Folie oder Klebeschicht angeordnet ist, sind aus der DE 25 55 382 A1, DE-OS 22 57 741, US-PS 3,666,614 sowie der DE 42 00 354 A1 bekannt.

So betrifft die DE 25 55 382 A1 Isolierscheiben aus zwei oder mehreren Scheiben aus Glas, die mit einem Harz verklebt sind, wobei das Harz ein Copolymer aus Polyestern und Vinylharzmonomeren ist.

Die DE-OS 22 57 741 offenbart Schalldämmplatten, bei denen zwei Glasplatten ebenfalls mit einem Kunststoffharz verklebt sind, wobei das Kunststoffharz die beiden Glasscheiben als dünner Film verbindet.

Die DE 42 00 354 A1 legt die Verwendung von (Meth)acrylatharzen mit verminderter Vergilbung zur Herstellung von Verbundglas nahe.

Aufgabe der vorliegenden Erfindung ist ein auf transparenten Kunststoffscheiben beruhendes Scheibenelement der eingangs beschriebenen Art, das ohne das positive Eigenschaftsprofil der bekannten Lärmschutzelemente aufzugeben, gleichzeitig deren Brandverhalten verbessert. Ferner soll die verbesserte Kunststoffscheibe einfach zu reinigen sein, insbesondere auch mit maschinellen Einrichtungen, wie beispielsweise rotierenden Bürsten u. dgl., ohne ein Verkratzen der empfindlichen Oberflächen befürchten zu müssen, und sie soll durch höhere Biegesteifigkeit bei der Gestaltung der Wände größere Pfostenabstände als bisher zulassen.

Diese sowie weitere nicht im einzelnen näher aufgeführte Aufgaben werden bei einem transparenten Scheibenelement der eingangs erwähnten Gattung durch die Merkmale des kennzeichnenden Teils des Anspruches 1 gelöst.

Vorteilhafte Ausführungsformen sind Gegenstand der abhängigen Ansprüche.

Dadurch, daß das Scheibenelement als Verbundscheibe ausgeführt ist mit einer Kunststoffscheibe als Kern, der zwischen zwei Scheiben aus anorganischem Glas angeordnet ist, gelingt es, ein Verbundmaterial zur Verfügung zu stellen, das alle Vorteile der bekannten Elemente aufweist, insbesondere auch den Vorteil der Splitterbindung bei Bruch, und das darüber hinaus unter den Einsatzbedingungen praktisch nicht brennbar ist, eine höhere Steifigkeit, insbesondere Biegesteifigkeit, im Vergleich zu gleich dicken Lärmschutzelementen nur aus Kunststoff aufweist und das dank der Oberflächen mit erhöhter Kratzfestigkeit einfach und kostengünstig auch maschinell zu reinigen ist.

Die zwischen zwei Scheiben aus anorganischem Glas eingebetteten Kunststoffscheiben sind an sich bekannt. Dabei ist der als "Matrix" für die fadenförmigen Elemente dienende Kunststoff ein thermoplastischer Kunststoff, der bevorzugt amorph ist und weiterhin bevorzugt einen etwa gleichen oder auch geringeren Wärmeausdehnungskoeffizienten als der Kunststoff der innenliegenden Kunststoffäden, -bänder, -gitter oder -netze, welcher amorph, teilkristallin oder kristallin sein kann, aufweist.

Bevorzugt weist der innenliegende Kunststoff (fadenförmige Elemente) eine höhere Reißdehnung, eine höhere Scherstabilität sowie eine höhere Viskosität als der Matrixkunststoff auf.

Beispielhaft sind als amorphe Kunststoffe A oder B zu nennen: Polyvinylester, Polyvinylether, amorphe Polyvinylhalogenide, Polystyrole, Polyphenylenoxide, Polyphenylensulfide, Polycarbonate, Polysulfone, amorphe Polyamide, Polyetherketone, Polyetheretherketone, Polyethersulfone, Polyimide, Polyetherimide, Polyfluoralkene, Polyestercarbonate, amorphe Polyolefine und ganz besonders bevorzugt Poly(meth)acrylate. Beispiele für die kristallinen oder teilkristallinen Kunststoffe B sind Polymerisate, in denen die Kristallinität bedingt wird durch eine gleichmäßige Taktizität oder ausreichende kleine Substituenten, so daß sich zumindest partiell ein Kristallgitter ausbilden kann. Beispielhaft zu nennen wären Polyester, kristalline Polyolefine, kristalline Polyvinylhalogenide, flüssigkristalline Polymere mit mesogenen Gruppen in Haupt- und/oder Seitenkette, oder besonders bevorzugt kristalline Polyamide. Zur Herstellung und Charakterisierung der Kunststoffe A und B vergleiche beispielsweise Kirk-Othmer, Encyclopedia of Chemical Technology, 3rd Ed. Vol. 18, Seiten 720 bis 755, Wiley Interscience, 1982.

Die Herstellung solcher Kunststoffplatten kann auf jede dem Fachmann geläufige Weise geschehen.

In bevorzugter Ausführungsform wird die Kunststoffscheibe als Kern der Verbundscheibe nach einem diskontinuierlichen Gießverfahren erhalten.

Dabei kann man z. B. so vorgehen, daß man mit zwei vorgefertigten gegossenen Kunststoffplatten, z. B. Acrylglasplatten (2000 mm x 1220 mm x 8 mm) mit Hilfe einer 4 mm starken umlaufenden Dichtung eine Kammer bildet. In diese Kammer werden dann etwa mittig im Abstand von jeweils 30 mm parallel zueinander monofile Kunststoffäden, z. B. Polyamidfäden, mit einem Durchmesser von 0,9 mm eingespannt. Dann wird in die Kammer ein niedrigviskoses, einen äußeren Weichmacher auf der Basis eines Zitronensäureesters und ein Redoxinitiatorsystem enthaltendes kalthärtendes Methacrylatharz eingefüllt.

Nach vollständiger Aushärtung der Zwischenschicht erhält man eine Kunststoffscheibe, die als Kern der Verbundscheibe geeignet ist.

Alternativ dazu ist es auch besonders vorteilhaft, die Kunststoffscheibe als Kern der erfindungsgemäßen Verbundscheibe durch kontinuierliche Coextrusion zweier unverträglicher thermoplastischer Kunststoffe herzustellen.

Bevorzugt wird dabei der Kunststoff einer Coextrusionsdüse an den Einspeisestellen eingespeist und dann in zwei getrennten Verteilerkanälen auf die gewünschte Produktbreite verteilt. Zwischen den Verteilerkanälen für den Kunststoff wird der einzubettende Kunststoff an der Einspeisestelle in eine Querverteilerbohrung eingespeist. Der einzubettende Kunststoff verläßt die Querverteilerbohrung durch eine größere Anzahl von Bohrungen, die der Anzahl von Segmenten dieses Materials in der Matrix aus entspricht.

Dort wo der einzubettende Kunststoff aus den Bohrungen austritt, werden auch die beiden Schichten aus dem Matrixkunststoff zusammengeführt und umschließen damit die Stränge aus dem einzubettenden Kunststoff.

Die Querschnittsform der einzubettenden Kunststoffe in die Matrix hängt im wesentlichen von der Gestaltung der Bohrungen im Auslaufbereich und dem Verhältnis der Viskositäten des Matrixkunststoffes und des einzubettenden Kunststoffes ab. Ist die Viskosität des einzubettenden Kunststoffes größer als die Viskosität der Matrix, so werden die Segmente im Querschnitt eher rund, bei umgekehrtem Viskositätsverhältnis eher flach.

Nach dem Verlassen der Düse kann der Verbund in einem konventionellen Glättwerk kalibriert werden. Da der einzubettende Kunststoff im Matrixkunststoff eingeschlossen ist, kann er nur relativ langsam abkühlen. Bei einem teilkristallinen oder kristallinen einzubettenden Kunststoff werden hierdurch wesentlich höhere Kristallinitätsgrade erreicht als bei konventioneller Extrusion der Stränge des einzubettenden Materials.

Ist eine über der Länge periodische Änderung des Querschnitts der Segmente des einzubettenden Materials erwünscht, so kann dies auf einfachem Wege durch periodische Änderung des an der Stelle eingespeisten Massestroms erfolgen. Da der einzubettende Kunststoff eine höhere Wärmedehnung als der Matrixkunststoff hat, wird in Verbindung mit dem Formschluß zwischen den beiden Kunststoffen eine Vorspannung der Segmente des einzubettenden Kunststoffes erreicht (vergleichbar mit Stahlbeton). Dies erlaubt eine weitere Steigerung der mechanischen Eigenschaften des Verbundes.

Die im Inneren der Kunststoffscheibe des Verbundes eingebetteten Kunststoffäden können so angeordnet sein, daß sie parallel zueinander in nur einer Richtung verlaufen, oder so, daß sie jeweils parallel zueinander in zwei Richtungen verlaufen. Im letzteren Falle können die beiden Richtungen einen Winkel von 90° oder auch einen von 90° abweichenden Winkel bilden. Werden Kunststoffbänder eingebettet, werden sie zweckmäßigerweise so angeordnet, daß sie parallel zueinander in nur einer Richtung verlaufen.

In besonderer Ausführungsform sind die innenliegenden Kunststoffäden kontrastreich und besitzen dadurch einen Vogelschutzeffekt.

Kontrastreich sind Kunststoffäden mit einem Transmissionsgrad des für die Herstellung verwendeten Kunststoffes zwischen 0 und 65 % (gemessen nach DIN 5033 Farbmessung und 5036 strahlungsphysikalische und lichttechnische Eigenschaften von Materialien). Vorzugsweise hat das Material oder der Kunststoffaden selbst einen Transmissionsgrad von 0 bis 30 %, insbesondere 0 bis 10 %. Besonders günstig ist ein Transmissionsgrad von ca. 0 %. Vorteilhaft werden Fäden mit einer dunklen Farbe, insbesondere schwarze Fäden, verwendet. Fliegende Vögel erkennen eine solche transparente Wand dank deren kontrastreichen Fäden aus einigen Metern Entfernung noch rechtzeitig als Hindernis und können die Kunststoffwand entsprechend umfliegen.

Besonders vorteilhaft sind dabei Ausführungen, bei denen die Kunststoffäden 1 mm bis 5 mm dick sind. Insbesondere der Dickenbereich 1,8 mm bis 3,0 mm, bevorzugt 2,0 mm bis 2,5 mm, hat sich hinsichtlich der geforderten Eigenschaften, leichtes Einbringen in die Kunststoffscheibe, genügende Festigkeit im Falle eines Bruches, ausreichende Vogelschutzwirkung und keine wesentliche Beeinträchtigung der gesamten Transparenz der Scheibe als besonders günstig erwiesen.

Üblicherweise verlaufen die Fäden in der Kunststoffscheibe horizontal, da die Scheiben seitlich eingespannt werden; der Zusammenhalt im Falle eines Bruches ist dann besonders günstig. Üblicherweise werden die Fäden parallel zueinander verlegt. Falls gewünscht oder erforderlich, können zwei Lagen von Fäden in die Scheibe eingebracht werden, die dann vorzugsweise in zwei Richtungen verlaufen, wobei ein Winkel von 90° zwischen Fäden unterschiedlicher Lagen besonders vorteilhaft ist. Eine solche Ausführung sieht von außen betrachtet aus wie ein Gittergewebe.

In der Regel wird ein Fadenabstand zwischen benachbarten Fäden von höchstens 100 mm gewählt, darüber sinkt die Wirkung des Vorgelschutzes bzw. der Sicherung von Bruchstücken deutlich ab. Vorzugsweise wird ein Fadenabstand bis zu 50 mm gewählt, insbesondere wenn die Fäden horizontal verlaufen, da Vögel vermutlich horizontale Hindernisse weniger gut erkennen als vertikale.

Die Flächendichte der kontrastreichen Fäden, d. h. der Prozentbereich der von den Fäden in der gesamten Kunststoffscheibe verdeckten Fläche, reicht üblicherweise von 2,5 bis 25 %. Vorzugsweise, insbesondere bei horizontalen Fäden, beträgt die Flächendichte mindestens 5 %, besonders vorteilhaft sind 6 bis 10 %. Bei vertikal verlegten Fäden kommt man mit einer etwas geringeren Flächendichte aus, so daß hier der vorteilhafte Bereich bei 5 bis 8 % liegt. Unterhalb dieser Flächendichte geht die Wirkung des Vogelschutzes schnell verloren, oberhalb dieser Werte bleiben die Fäden auch in größerer Entfernung sichtbar und wirken entsprechend unästhetisch, d. h. die vorteilhafte Wirkung der Transparenz der Kunststoffscheibe geht weitgehend verloren.

Typische Scheibendicken liegen bei 5 bis 40 mm, bevorzugt sind 12 bis 25 mm. Die Scheiben werden üblicherweise in einer Größe von 1,5 m x 1 m bis 2 m x 3 m gefertigt, für spezielle Anwendungen sind auch größere oder kleinere Ausführungen möglich.

Die Scheiben sind üblicherweise weitgehend klar durchsichtig (transparent), vorzugsweise farblos oder leicht, z. B. rauchbraun, getönt. Die farblosen, glasklar durchsichtigen Kunststoffscheiben haben üblicherweise einen Transmissionsgrad von mindestens 70 %, vorteilhaft ist eine Transmission von 90 bis 95 %. Getönte Ausführungen haben üblicherweise einen Transmissionsgrad von 45 bis 75 %, üblicherweise zwischen 50 und 60 %. Die Absorptionen der Fäden und der getönten Scheibe addieren sich dabei, so daß die Fäden auch weiterhin als kontrastreiche Elemente erkennbar sind.

Von den vorgenannten Materialien für den Kunststoffscheibenkern sind Acrylglas und Polycarbonat bevorzugt.

Besonders zweckmäßig kennzeichnet sich die Erfindung dadurch, daß das Material der Kunststoffscheibe Acrylglas ist, wobei der Kunststoffkern dann besonders bevorzugt eingebettete Fäden aus Polyamid aufweist.

Das wesentlich Kennzeichnende der Erfindung besteht nun darin, daß die erläuterte Kunststoffscheibe als Kern der Verbundscheibe zwischen zwei Scheiben aus anorganischem Glas angeordnet ist.

Obwohl dabei das anorganische Glasmaterial an sich keinen besonderen Beschränkungen unterliegt, sind solche Ausführungsformen bevorzugt, worin eine ausreichende und hohe Haftung zwischen den Glasscheiben und dem Kunststoffscheibenkern erzielt werden kann.

Dabei war insbesondere überraschend, daß es gelang, die Haftung zwischen bevorzugt anorganischem Floatglas oder auch Einscheibensicherheitsglas einerseits und einem Kunststoffscheibenkern andererseits so auszugestalten, daß die Splitterbindungswirkung des Kernes bei Bruch auch auf die Glasbestandteile des Verbundes ausgedehnt ist. Mit anderen Worten, falls es zu einem Bruch des gesamten Aufbaues kommt, wird dadurch ein Umherfliegen von Glasbestandteilen der Scheiben aus anorganischen Gläsern ebenso vermieden, wie etwaige Splitterfreisetzungen aus dem Kunststoffscheibenkern.

Dabei kommen regelmäßig eine ganze Reihe von Gläsern als Verbundpartner für die erfindungsgemäßen Verbundscheiben mit Kunststoffscheibenkern in Frage. Zu den einsetzbaren anorganischen Gläsern gehören u. a. Floatglas und Spiegelglas, beide bevorzugt gehärtet als Einscheibensicherheitsglas.

Von den vorgenannten Glassorten ist Floatglas als Einscheibensicherheitsglas bevorzugt.

Zur Herstellung der erfindungsgemäßen Aufbauten kommen wiederum alle dem Fachmann geläufigen Verfahren in Frage. So ist es einerseits möglich, die Scheiben aus anorganischem Glas auf vorgefertigte Kunststoffscheiben-Elemente aufzukaschieren. Dies geschieht dann bevorzugt mit Haftvermittlern, die z. B. ebenfalls bei dem, dem Fachmann bekannten Verfahren zur Fertigung von Verbundsicherheitsgläsern aus anorganischem Glas, eingesetzt werden. Bevorzugt geht man dabei so vor, daß die Glasscheiben zunächst gründlich gereinigt werden. Entsprechendes gilt für den Kunststoffscheibenkern. Zwischen den Kunststoffkern und die Glasscheibe werden dann eine oder mehrere Kunststoff-Zwischenschichten (z. B. Folie aus Polyvinylbutyral) gelegt. Der Aufbau wird dann zur Verbindung in einem Walzverfahren miteinander verpreßt. Danach kommt die verpreßte Kombination in einen Autoklaven, wo Glas und Zwischenschichten sowie Kunststoffkernscheibe unter Hitze und Druck fest miteinander verbunden werden. Das erhaltene Scheibenelement weist eine hohe Festigkeit bei klarer unverzerrter Durchsicht auf.

Auf der anderen Seite kann eine ausreichende Haftung auch während des beispielsweise Gießverfahrens dadurch erzielt werden, daß die innenliegende Kunststoffscheibe zwischen den Glasscheiben und im Kontakt mit diesen polymerisiert wird. Gegebenenfalls werden in die zu polymerisierende Mischung zur Steigerung der Haftung geeignete Substanzen eingebracht, z. B. Organosilane.

Alternativ dazu ist es ebenfalls möglich, auf die durch Coextrusion hergestellten Kunststoffkernscheiben, die noch nicht endgültig abgekühlt sind, entsprechende Glasscheiben im noch warmen Zustand aufzulegen, wobei es zu einer ausreichenden Haftung auch ohne Zusatz eines Haftvermittlers kommen kann.

Insgesamt gesehen, sind erfindungsgemäß sowohl symmetrische als auch unsymmetrische Aufbauten herstellbar. D. h., daß bei einem symmetrischen Aufbau zwei identische Scheiben aus anorganischem Glas einen Kunststoffscheibenkern enthalten, oder mit anderen Worten, daß der Kern (Kunststoffglas) zwischen zwei Scheiben (Mineralglas) aus demselben Material angeordnet ist. Ist der Aufbau asymmetrisch, so ist darunter zu verstehen, daß zwei Scheiben aus anorganischem Glas, wobei die beiden Scheiben aus anorganischem Glas aus unterschiedlichem Material bestehen, zusammen mit einem Kunststoffscheibenkern einen erfindungsgemäßen Verbund bilden. Hierdurch ist es beispielsweise möglich, die Ausführungsform des erfindungsgemäßen Verbundes an bestimmte Erfordernisse anzupassen. So kann auf der der Straße oder Schiene zugewandten Seite der Lärmschutzwand wegen der geforderten Steinschlagfestigkeit eine Einscheibensicherheitsglasplatte vorgesehen sein, während auf der Rückseite eine billigere Beglasung mit beispielsweise Floatglas in Frage kommt.

Die erfindungsgemäßen Verbundscheiben werden insbesondere für brandsichere, biegesteife Lärmschutzwände mit kratzfester Oberfläche eingesetzt. Hierbei ist desweiteren besonders bevorzugt, den inneren Kunststoffkern so auszugestalten, daß der erfindungsgemäße Verbund gleichzeitig als Vogelschutzelement dienen kann.

Darüber hinaus lassen sich die Verbundscheiben der Erfindung auch im sogenannten "Überkopfbereich" zu Bedachungszwecken, beispielsweise von Fußgängerzonen, Galerien, Wintergärten oder Vordächern, einsetzen.

Eine weitere Verwendung besteht im Einsatz zu Verglasungszwecken, wie Geländer oder Wartehäuschen usw.

Im nachfolgenden wird die Erfindung anhand von Ausführungsbeispielen unter Bezugnahme auf die beigefügten Figuren weitergehend erläutert.

In den Figuren zeigen
- Figur 1: eine perspektivische teilweise weggeschnittene Darstellung einer ersten Ausführungsform des erfindungsgemäßen Scheibenelementes, wobei verdeckte Einzelheiten teilweise gestrichelt angedeutet sind;
- Figur 2: eine perspektivische teilweise weggeschnittene Darstellung einer zweiten Ausführungsform des erfindungsgemäßen Scheibenelementes, wobei verdeckte Einzelheiten teilweise gestrichelt angedeutet sind;
- Figur 3: eine perspektivische teilweise weggeschnittene Darstellung einer dritten Ausführungsform des erfindungsgemäßen Scheibenelementes, wobei verdeckte Einzelheiten teilweise gestrichelt angedeutet sind;
- Figur 4: eine perspektivische teilweise weggeschnittene Darstellung einer vierten Ausführungsform des erfindungsgemäßen Scheibenelementes, wobei verdeckte Einzelheiten teilweise gestrichelt angedeutet sind; und
- Figur 5: eine perspektivische teilweise weggeschnittene Darstellung einer fünften Ausführungsform des erfindungsgemäßen Scheibenelementes, wobei verdeckte Einzelheiten teilweise gestrichelt angedeutet sind.

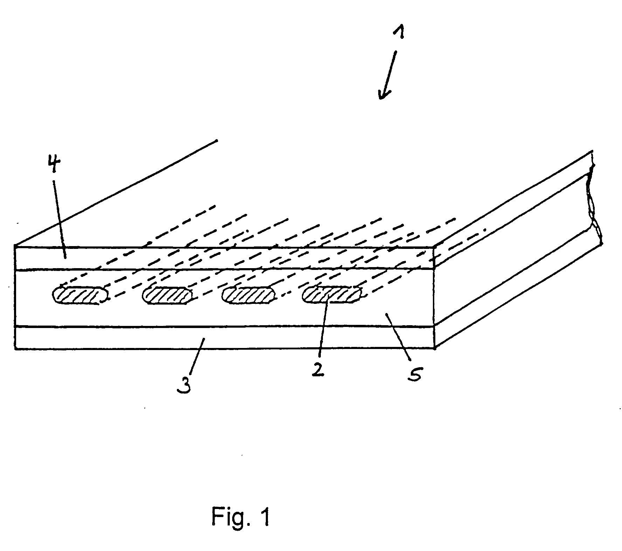

Mit 1 wird in den Figuren 1 bis 5 ein erfindungsgemäßes brandsicheres, transparentes Scheibenelement bezeichnet. Wie in allen Figuren zu erkennen ist, weist es als Kern eine Kunststoffscheibe 5 auf, die zwischen zwei Glasscheiben 3 und 4 eingebettet ist und mit diesen eine Verbundscheibe 1 ausbildet. Die Glasscheiben 3 und 4 können aus unterschiedlichem oder demselben Material bestehen. In das Kernelement aus Kunststoff 5 sind fädige oder flächige Kunststoffgebilde 2 eingebettet.

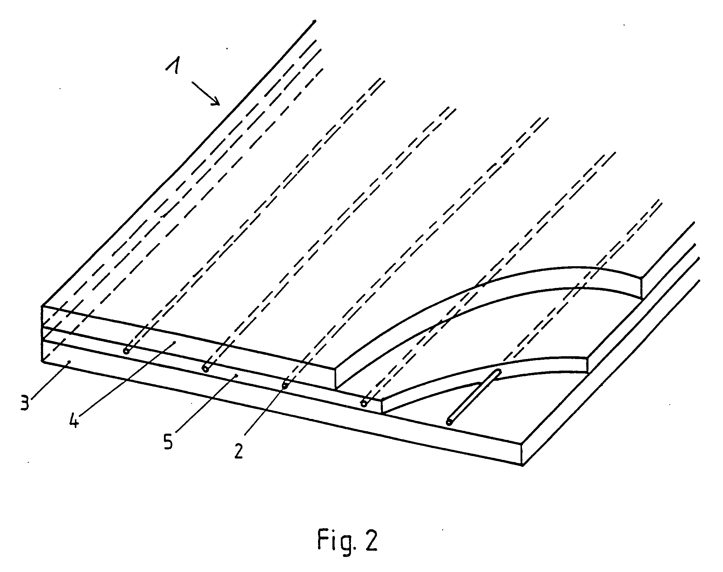

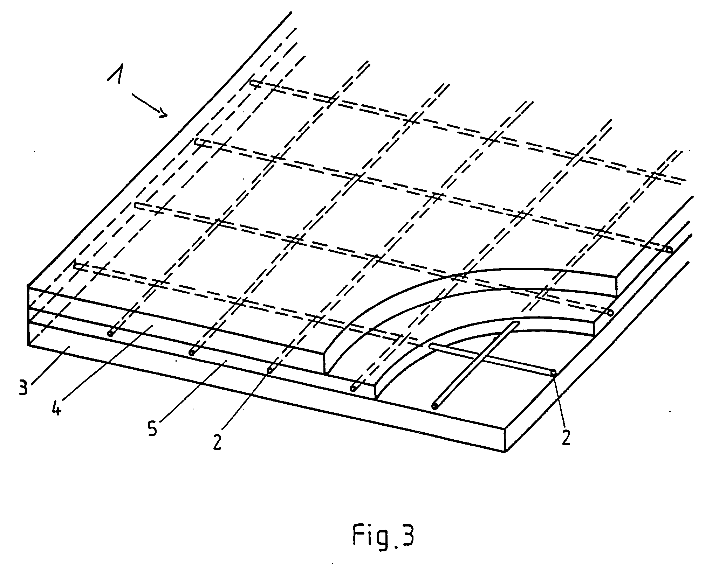

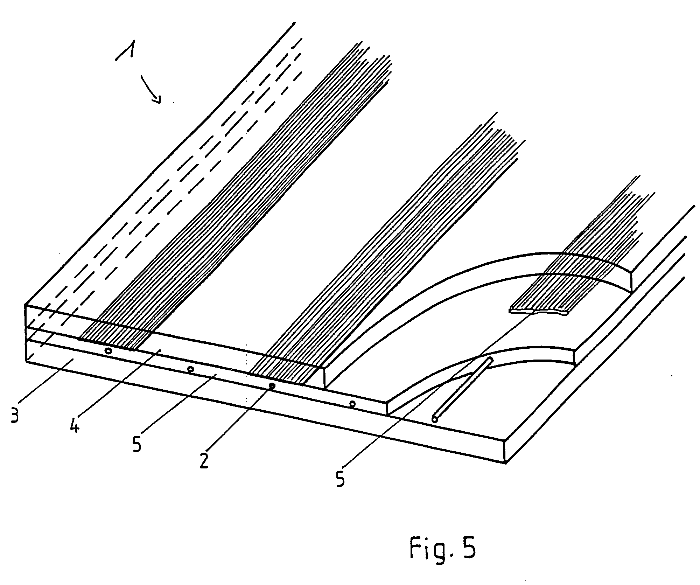

Die Figur 1 stellt durch Coextrusion erhaltene fädige Kunststoffschichten 2 dar, die im Rahmen der Herstellung des Kunststoffscheibenkerns 5 in diesem angeordnet werden. In Figur 5 sind Kunststoffbänder 2 durch ein Gießverfahren in den Kern 5 eingebettet. Figur 2 zeigt die Ausgestaltung der eingelegten Elemente 2 als Fäden, die sich parallel zueinander erstrecken, während Figur 3 einen Fall verdeutlicht, bei dem sich die Fäden 2 unter Ausbildung eines Gitters kreuzen, wobei sich sowohl die Längsfäden im wesentlichen parallel zueinander verhalten ebenso wie dies für die in einem Winkel von etwa 90° dazu quer verlaufenden Fäden 2 gilt. Die Fäden 2 können in zwei Ebenen angeordnet sein, so daß die Längsfäden oberhalb oder unterhalb der Querfäden verlaufen. Die Längsfäden können jedoch auch alternativ oberhalb und unterhalb der quer dazu verlaufenden Fäden angeordnet sein.

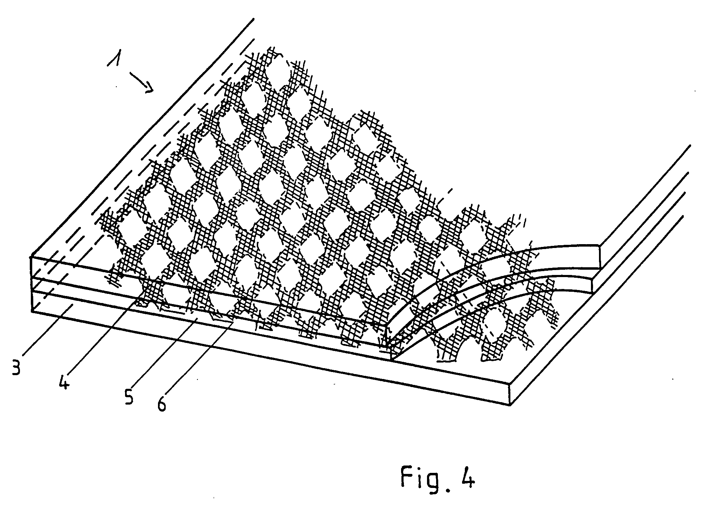

In Figur 4 schließlich wird der Einsatz einer netzartigen Struktur 6 als Fadenelement 2 dargestellt.

Erfindungsgemäße Scheibenelemente können z. B. wie folgt hergestellt werden:

Zwei Scheiben mit den Abmessungen 3000 x 2000 x 8 mm aus ESG (Einscheibensicherheitsglas) werden mit Hilfe einer umlaufenden Dichtung so distanziert, daß zwischen den Scheiben ein Spalt von 4 mm entsteht. In diesem Hohlraum sind schwarze, 2 mm dicke Polyamidfäden im Abstand von 30 mm prallel in Längsrichtung (Kantenlänge 3000 mm) angeordnet. Die Fäden wurden vor dem Zusammenfügen der beiden Glasplatten zur genauen Positionierung an der umlaufenden Dichtung fixiert.

Der Hohlraum zwischen den Scheiben wird nun durch eine Öffnung in der Dichtung mit einem niedrigviskosen farblosen Verbundharz auf Basis MMA und diverser Acrylat- und Methacrylat-Comonomere, z. B. ®Degalan S696 oder S700, befüllt. Die Polymerisation des kalthärtenden Verbundharzes wurde kurz vorher durch Zugabe von Härtern und Beschleuniger auf Basis von organischen Peroxiden und Organosilanverbindungen als Haftvermittlern gestartet.

Zur Befüllung wurden die Scheiben leicht schräg gestellt. Die Polymerisation, die nach etwa 1,5 h abgeschlossen ist, erfolgt bei horizontaler Plattenanordnung.

### Versuch 1: Herstellung von Lärmschutzelementen aus "Einscheibensicherheitsglas (ESG)" im Verbund mit "Naftolan S 696-M" Harz (PMMA-Harz) + Polyamidfäden

### Verwendete Materialien:

- Einscheibensicherheitsglas; 2000 x 2000 x 6 mm
- Polyamidfäden; Ø ca. 2 mm
- Butylkautschukkeder mit 3 mm Seele
- ® Naftolan S 696-M Harz (12 kg)
- Katalysatoren K 91 und K 66
- Schmelzkleber (MMA-beständig)
- Butylkautschukband; einseitig Aluminium-beschichtet

### Harzrezeptur:

| | | |
|---|---|---|
| 100 | Teile | ® Naftolan S 696-M |
| 2 | Teile | K 91 |
| 1 | Teil | K 66 |

### Herstellung:

Eine ESG-Scheibe wurde auf einen verstellbaren Labortisch aufgelegt und mit Isopropanol von Verunreinigungen befreit. Auf die ESG-Scheibe sind dann die auf eine Spannvorrichtung gespannten Polyamidschnüre aufgelegt worden (Abstand der Schnüre zueinander ca. 30 mm).

Im Anschluß hieran wurde der Butylkautschukkeder aufgebracht und die zweite Scheibe ESG aufgelegt.

Als zusätzliche Abdichtung ist der entstandene Zwischenraum mit Schmelzkleber und mit Butylkautschukband versiegelt worden.

Die so entstandene Tasche wurde mit dem Harz gefüllt, das man dann aushärten ließ.

### Bruchtest:

Das o. g. Lärmschutzelement wurde auf vier Holzböcke (Höhe ca. 860 mm) aufgelegt, nicht aufgespannt oder gesichert. Zum Schutz des Bodens wurde auf denselben eine 1200 x 1200 x 140 (L x B x H) große Holzpalette gelegt.

Aus einer Höhe von 1000 mm über dem Lärmschutzelement wurde in 300 kg schweres zylinderförmiges Metallgewicht auf die Elementmitte fallen lassen. Der Auftreffpunkt des Metallgewichtes wurde mit einem Radius versehen.

### Versuchsbeobachtungen:

Beim Auftreffen des Metallgewichtes splitterte das Einscheibensicherheitsglas in seiner typischen Form von kleinen Glassplittern. Diese Splitter wurden vollständig von Harz gehalten!

Weiter ist ein vom Rand ausgehender Riß der Platte entstanden, der aber kein freies Bruchstück zur Folge hatte.

### Versuch 2: Herstellung und Prüfung von Lärmschutzelementen aus Floatglas im Verbund mit PMMA-Harz + Polyamidfäden

In Abwandlung von Versuch 1 wurde anstatt des ESG nicht gehärtetes Floatglas eingesetzt.

Die unter Verwendung von Floatglas hergestellte Lärmschutzplatte wurde in einem Metallrahmen gesichert, und der Metallrahmen wurde aufgebockt.

Das Metallgewicht durchschlug die eingespannte Platte, es traten jedoch keine freien Splitter auf. Über die von den Polyamidfäden gehaltenen Harzteile gelang es, die Splitterbindung auch auf die Mineralglasbestandteile des Lärmschutzelements auszudehnen.

## Patentansprüche

1. Brandsicheres, transparentes Scheibenelement mit einer Kunststoffscheibe mit innenliegenden Kunstoffäden, die im Falle eines Bruches entstehende Bruchstücke weitgehend zusammenhalten,
**dadurch gekennzeichnet,**
**daß** das Scheibenelement (1) als Verbundscheibe ausgeführt ist mit einer Kunststoffscheibe (5) aus Acrylglas mit eingebetteten Polyamidfäden (2) als Kern, der zwischen zwei Scheiben (3, 4) aus anorganischem Glas angeordnet ist, wobei die Scheibendicke der inneren Kunststoffscheibe (5) im Bereich 4 bis 40 mm liegt.

2. Scheibenelement nach Anspruch 1,
**dadurch gekennzeichnet,**
**daß** innenliegende Kunststoffäden (2) einen Durchmesser zwischen 1 und 5 mm aufweisen und daß der Abstand der Fäden höchstens 100 mm und die Flächendichte der Fäden zwischen 2,5 und 25 % beträgt.

3. Scheibenelement nach Anspruch 1 oder 2,
**dadurch gekennzeichnet,**
**daß** die Kunststoffäden (2) monofile Fäden aus Polyamid oder Polypropylen sind.

4. Scheibenelement nach einem der vorhergehenden Ansprüche,
**dadurch gekennzeichnet,**
**daß** die Fäden (2, 6) kontrastreich sind und einen Transmissionsgrad des für die Herstellung der Fäden verwendeten Kunststoffs von 0 - 65 % aufweisen.

5. Scheibenelement nach einem oder mehreren der vorhergehenden Ansprüche,
**dadurch gekennzeichnet,**
**daß** der Kern (5) zwischen zwei Scheiben (3, 4) aus demselben anorganischen Glas angeordnet ist.

6. Scheibenelement nach Anspruch 5,
**dadurch gekennzeichnet,**
**daß** das anorganische Glas Floatglas oder Einscheibensicherheitsglas ist.

7. Scheibenelement nach einem oder mehreren der Ansprüche 1 bis 4,
**dadurch gekennzeichnet,**
**daß** der Kern (5) zwischen zwei Scheiben (3, 4) aus unterschiedlichem anorganischen Glas angeordnet ist.

8. Verfahren zur Herstellung eines Scheibenelements nach einem oder mehreren der Ansprüche 1 bis 7,
**dadurch gekennzeichnet,**
**daß** man die Kunststoffscheibe (5) als Kern der Verbundscheibe (1) nach einem diskontinuierlichen Gießverfahren erhält.

9. Verfahren zur Herstellung eines Scheibenelements nach einem oder mehreren der Ansprüche 1 bis 7,
**dadurch gekennzeichnet,**
**daß** man die Kunststoffscheibe (5) als Kern der Verbundscheibe (1) durch kontinuierliche Coextrusion zweier unverträglicher thermoplastischer Kunststoffe erhält.

10. Verwendung des Scheibenelements nach einem der vorhergehenden Ansprüche für eine brandsichere, biegesteife Lärmschutzwand mit kratzfester Oberfläche.

11. Verwendung nach Anspruch 10 in Verbindung mit insbesondere Anspruch 6 als Vogelschutz.

## Claims

1. A fireproof, transparent panel having a plastics panel with internal plastics filaments, which hold fragments together to a considerable extent in the event of breakage,
**characterised in that**
the panel (1) takes the form of a composite panel having as its core a plastics panel (5) of acrylic sheet with embedded polyamide filaments (2), which core is arranged between two panels (3, 4) of inorganic glass, wherein the thickness of the inner plastics panel (5) lies in the range of from 4 to 40 mm.

2. A panel according to claim 1,
**characterised in that**
internal plastics filaments (2) exhibit a diameter of between 1 and 5 mm and **in that** the spacing of the filaments amounts to at most 100 mm and the density per unit area of the filaments amounts to between 2.5 and 25 %.

3. A panel according to claim 1 or claim 2,
**characterised in that**
the plastics filaments (2) are monofilaments of polyamide or polypropylene.

4. A panel according to one of the preceding claims,
**characterised in that**
the filaments (2, 6) are high-contrast and exhibit 0 - 65 % of the transmittance of the plastics used for production of the filaments.

5. A panel according to one or more of the preceding claims,
**characterised in that**
the core (5) is arranged between two panels (3, 4) of the same inorganic glass.

6. A panel according to claim 5,
**characterised in that**
the inorganic glass is float glass or toughened safety glass.

7. A panel according to one or more of claims 1 to 4,
**characterised in that**
the core (5) is arranged between two panels (3, 4) of different inorganic glass.

8. A process for producing a panel according to one or more of claims 1 to 7,
**characterised in that**
the plastics panel (5) constituting the core of the composite panel (1) is obtained by a discontinuous casting process.

9. A process for producing a panel according to one of more of claims 1 to 7,
**characterised in that**
the plastics panel (5) constituting the core of the composite panel (1) is obtained by continuous coextrusion of two incompatible thermoplastics.

10. Use of the panel according to one of the preceding claims for a fireproof, bending-resistant noise barrier with scratch-resistant surface.

11. Use according to claim 10 together, in particular, with claim 6 for bird protection.

## Revendications

1. Panneau transparent, protégé contre l'incendie, comprenant un panneau en matière plastique intégrant des fils de matière plastique pour retenir dans une très large mesure les morceaux en cas de rupture,
**caractérisé en ce que**
le panneau transparent (1) est une vitre composée comprenant un panneau en matière plastique (5) de verre acrylique intégrant des fils de polyamide (2) comme noyau entre deux vitres (3, 4) de verre anorganique, l'épaisseur du panneau intérieur de matière plastique (5) étant de l'ordre de 4 à 40 mm.

2. Panneau selon la revendication 1,
**caractérisé en ce que**
les fils de matière plastique (2) intégrés ont un diamètre compris entre 1 et 5 mm, la distance des fils est au plus de 100 mm et la densité surfacique des fils est comprise entre 2,5 et 25 %.

3. Panneau selon l'une quelconque des revendications 1 ou 2,
**caractérisé en ce que**
les fils de matière plastique (2) sont des monofils de polyamide ou de polypropylène.

4. Panneau selon l'une quelconque des revendications précédentes,
**caractérisé en ce que**
les fils (2, 6) ont un fort contraste et un degré de transmission de la matière plastique utilisée pour la fabrication des fils compris entre 0 et 65 %.

5. Panneau selon l'une quelconque des revendications précédentes,
**caractérisé en ce que**
le noyau (5) est placé entre deux vitres (3, 4) du même verre anorganique.

6. Panneau selon la revendication 5,
**caractérisé en ce que**
le verre anorganique est du verre flotté ou du verre de sécurité à une couche.

7. Panneau selon l'une quelconque des revendications 1 à 4,
**caractérisé en ce que**
le noyau (5) est placé entre deux vitres (3, 4) de verre anorganique différent.

8. Procédé de fabrication d'un panneau selon l'une quelconque des revendications 1 à 7,
**caractérisé en ce qu'**
on réalise le panneau de matière plastique (5) comme noyau de la vitre composée (1) selon un procédé de coulée discontinu.

9. Procédé de fabrication d'un panneau selon l'une quelconque des revendications 1 à 7,
**caractérisé en ce qu'**
on réalise le panneau en matière plastique (5) comme noyau de la vitre composée (1) par coextrusion continue de deux matières thermoplastiques incompatibles.

10. Application du panneau selon l'une quelconque des revendications précédentes, comme mur antibruit protégé contre l'incendie, rigide en flexion et ayant une surface résistant aux rayures.

11. Application du panneau selon la revendication 10 en combinaison avec notamment la revendication 6 comme protection des oiseaux.
